# EUROPEAN PATENT APPLICATION

(11) **EP 1 170 267 A1**
(43) Date of publication of application: **09.01.2002**
(21) Application number: 99959425.2
(22) Date of filing: 13.12.1999
(51) Int. Cl.: C04B 20/00

(54) **REFRACTORY CONCRETE**

(71) Applicant: Productos Refractarios Asturianos Para La Siderurg IA, S.A., 33186 Asturias (ES)
(72) Inventor: MARTINEZ VALVERDE, E., Prod. Refr. Ast. Side. SA, El Berron, Siero 33186 (ES); ROCES FONSECA, Ramon, Prod. Refr. Ast. Side SA, El Berron, Siero 33186 (ES)
(74) Representative: Carpintero Lopez, Francisco
(86) International application number: ES9900396
(87) International publication number: WO0144134

(57) **Abstract**

In conventional concretes (1) aggregates (2) form part with grains (3) which at most can reach 10 mm in size. In the refractory concrete (4) of the invention there are also granules (5) which can reach 60 mm in size, participating specifically grains (5) lying between 10 and 60 mm in a proportion which can attain 60% of the total of the granulometry. With this one achieves a lesser requirement for water in the preparation of this type of concrete, a smaller proportion of fine and ultrafine grains (2) to obtain similar conditions of pourability and compaction to those of traditional concretes, a more homogeneous heating, a denser and more compact structure with enhancement of mechanical strength and resistance to the appearance of fissures, a better pourability and an improved resistance to mechanical wear.

## Description

### OBJECT OF THE INVENTION

The present invention relates to a new refractory concrete, which has been substantially modified insofar as the granulometry of its components is concerned, in order to achieve substantial advantages with regard to conventional refractory concretes, both from the point of view of fabricating the concrete itself and from the point of view of the obtained properties thereof.

### BACKGROUND OF THE INVENTION

There exist at the present time various types of refractory concretes which can be classified according to their application and characteristics. Thus for example, it is possible to talk of insulating or dense concretes, according to whether they are employed for thermal insulation or in other uses like the dense varieties.

Within each type of concrete a classification could likewise be made according to the temperature that can be supported, this characteristic being conditioned by its chemical composition.

Specifically, the dense concretes are subdivided by their composition into normal, lean in cement and ultra-lean in cement according to their adaptation to multiple applications, such as being in contact with liquids in fusion, having to withstand impacts, blows or erosion or be subject to chemical aggression.

The present invention is of special application in concretes that are lean or ultra-lean in cement, intended to be in contact with liquids in fusion and which are emplaced by vibration, self-poured, gunited or tamped.

At the present time and within the scope of the refractory concretes, granulometries are employed which at most reach a size of 10 mm.

From the granulometry mentioned may be derived a number of conditioning factors which affect the percentage of water at the moment of the use, the pourability, the compaction, the uniformity of heating, the density, etc., parameters which are often found to be within ranges outside that which would be desirable.

To this end, these concretes, as well as the remaining refractory concretes and even the concretes for civil works, occasionally incorporate metallic fibres or admixtures which permit high mechanical strength to be achieved in order to prevent the occurrence of cracking in the concrete. Plastic fibres or concrete puncturing techniques are also employed in order to reduce the amount of water required and improve the heat distribution.

### DESCRIPTION OF THE INVENTION

The refractory concrete object of the invention overcomes the problems described above with no need to employ admixtures or additional elements of any kind.

Specifically the refractory concrete the invention proposed centres its characteristics on a special modification to the conventional granulometry, precisely on a substantial increase therein.

In more specific terms it is foreseen to have a proportion of grains, which can reach 60% of the total, with a granulometry which it turn can reach 60 mm, that is 50 mm above the maximum conventional granulometry or what amounts to the same thing, 6 times greater.

Depending on the thickness of the surfacing, elements can be included with sizes up to 100 mm.

This drastic modification to the granulometry of the concrete brings with it a number of benefits, which centre fundamentally on the following aspects:
- A lesser demand for water in the preparation of this kind of concrete.
- Need for a smaller proportion of fine and ultrafine grains to obtain similar conditions of pourability and compaction to those of the traditional concretes. This reduction in the number of very fine grains has a repercussion also in a reduction in the quantity of water that the product requires.
- Facilitates more uniform heating, since there are fewer spaces between grains and the larger sized grains facilitate the distribution of the heat.
- A denser and more compact structure is obtained, and the mesh that these grains form augments the mechanical strength and prevents the appearance of cracking. In this sense and in the hypothetical case of a crack appearing, when this reaches a grain of considerable size, the grain acts to halt the crack, since the stress producing said crack is not capable of breaking it and if the grain is sufficiently large neither can it grow round it and continue to crack the piece.
- The larger sized grains assist in the pourability of the concretes, since their weight pushes the rest of the grains form the effect of the force of gravity and facilitates the placement on site.
- The resistance to mechanical wear is increased, as it is more difficult to detach a large grain from the matrix than the finer grains, given that the former have a larger anchoring surface.

### DESCRIPTION OF THE DRAWINGS

In order to complete the description being made and for the purpose of assisting in a better understanding of the characteristics of the invention, in accordance with a preferred example of practical embodiment thereof, as an integral part of said description, a set of drawings is attached wherein by way of illustration and not restrictively, the following is shown:
Figure 1.- Shows a diagram comparing a conventional refractory concrete and the concrete which the invention proposes, according to an enlarged detail and in cross section.
Figure 2.- Shows, according to a representation similar to that of the previous figure, that is, also according to a comparative schematic, the differences in fissuring between a conventional refractory concrete and the refractory concrete of the invention.
Figure 3.- Shows, finally and also according to a representation similar to that of the previous figures, the greater resistance to mechanical wear offered by the refractory concrete of the invention in comparison with a conventional concrete.

### PREFERRED EMBODIMENT OF THE INVENTION

In all of the aforementioned figures, on the left-hand side thereof, a traditional refractory concrete (1) is represented, in which aggregates (2) having a variable granulometry form part, but the larger granules (3) of which never exceed 10 mm.

In the same figures, specifically on the right-hand side thereof, the refractory concrete of the invention is shown, referred to throughout with (4), it being possible to appreciate how the aggregates which form part thereof, part of which are similar to the aggregates (2) of conventional concrete, reach a size of 30 mm, specifically in those with reference (5).

In more specific terms provision has been made that the grains (5) which exceed 10 mm and which can attain a size of 60 mm, participate in the mix in a proportion which in turn can attain 60% of the total of the granulometry.

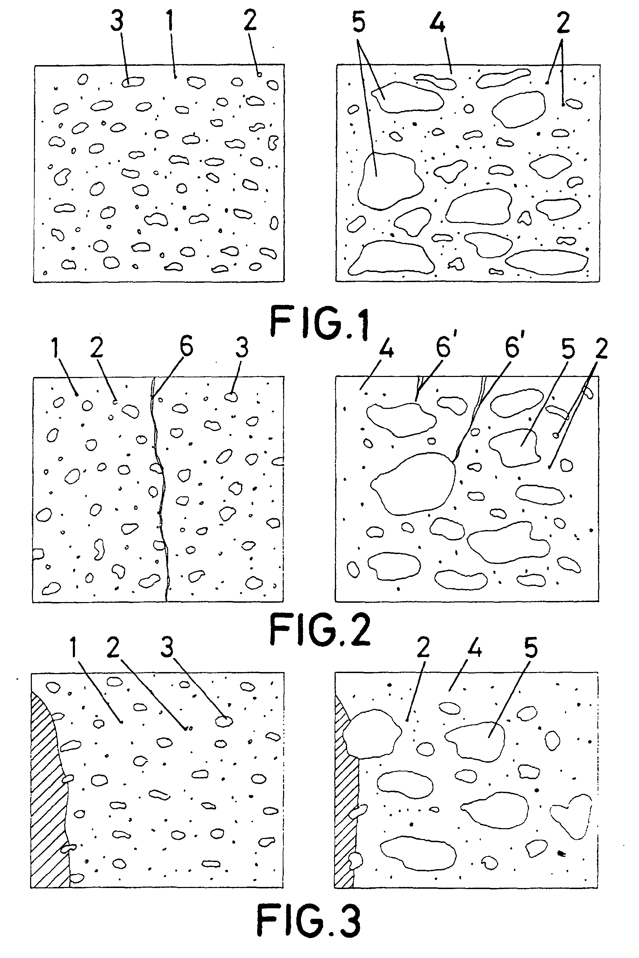

This gives rise to a substantially different structure for the concrete, as can be seen from the comparison of the two diagrams of figure 1, it being further inferred from this figure that, by the inherent granulometry of one concrete and the other, the amount of water necessary for the preparation thereof is considerably smaller in the case of the concrete of the invention, for while the water must clearly inundate the spaces defined between grains and though logically a grain (5) of large size is equivalent to a plurality of finer grains, but without there are obviously no spaces between them.

From the actual size of the grains (5) and as can be deduced from examining figure 2, whilst in a conventional concrete (1) the fissures (6) can extend freely throughout the piece of concrete (1), in the case of the refractory concrete of the invention the equivalent fissures (6'), are halted when they reach a large-sized grain (5), having their trajectory interrupted or, in other words, such grains (5) of considerable volume, impede the propagation of said fissures within the body of the piece.

Finally and in accordance with the representation of figure 3, the very size of the large grains (5) enhance the resistance to mechanical wear of the piece of refractory concrete, since they clearly offer much more difficulty to remove in the concrete (4) of the invention than in conventional concrete (1) with a much finer granulometry, where the embedded volume of the grains in the piece of concrete is considerably smaller, as is clearly visible from the simple graphical comparison of the pertinent schematics.

Additionally, as has already been stated, and though it does not appear reflected in the diagrams of the figures, the coarse grains (5), larger in size, assist in the pourability of the concretes, since their weight pushes the rest of the grains, by the effect of the force of gravity, facilitating placement on site.

## Claims

1. Refractory concrete, which based on the use of aggregates with traditional granulometries of up to 10 mm, is **characterised in that** it incorporates larger grains, the granulometry of which can attain 60 mm.

2. Refractory concrete, in accordance with claim 1, **characterised in that** the grains having a volume lying between 10 and 60 mm participate in the concrete mass in a proportion that can reach 60% of the total of the granulometry.
